(19) Europäisches Patentamt / European Patent Office / Office européen des brevets

(11) **EP 2 018 709 B1**

(12) **FASCICULE DE BREVET EUROPEEN**

(45) Date de publication et mention de la délivrance du brevet:
**19.05.2010 Bulletin 2010/20**

(21) Numéro de dépôt: **07728108.7**

(22) Date de dépôt: **13.04.2007**

(51) Int Cl.:
*H04B 1/713* $^{(2006.01)}$

(86) Numéro de dépôt international:
**PCT/EP2007/053643**

(87) Numéro de publication internationale:
**WO 2007/122122 (01.11.2007 Gazette 2007/44)**

(54) **Procédé et dispositif de lutte anti-interférences dans un système de télécommunications**

Verfahren und Einrichtung zur Bekämpfung von Störungen in einem Telekommunikationssystem

Method and device to combat interferences in a telecommunication system

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **14.04.2006 FR 0603358**

(43) Date de publication de la demande:
**28.01.2009 Bulletin 2009/05**

(73) Titulaire: **Thales**
**92200 Neuilly Sur Seine (FR)**

(72) Inventeurs:
• **CHEVALIER, Pascal**
**92400 Courbevoie (FR)**
• **VAN DE WIELE, François**
**75017 Paris (FR)**
• **DONNET, Christophe**
**92130 Issy Les Moulineaux (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A1- 2005 281 242**

• **JIN YOUNG KIM: "Adaptive spatial filtering for an FH/SSMA packet radio network with packet combining" INTERNATIONAL JOURNAL OF WIRELESS INFORMATION NETWORKS, vol. 8, no. 1, 1 janvier 2001 (2001-01-01), pages 37-47, XP002413419 Kluwer Academic/Plenum Publishers**
• **KAMIYA, Y.; BESSON O.: "A constant power algorithm for partial-band interference rejection in frequency-hopping communication systems" XI EUROPEAN SIGNAL PROCESSING CONFERENCE, [Online] 3 septembre 2004 (2004-09-03), page 1-4, XP002413420 Toulouse, France Extrait de l'Internet: URL:http://www.eurasip.org/content/Eusipco /2002/articles/paper012.html> [extrait le 2007-01-05]**

# EP 2 018 709 B1

**Description**

L'invention concerne notamment un procédé et un dispositif de lutte anti-interférences dans un système de communication à saut de fréquence.

Elle s'applique, notamment, à une liaison montante de télécommunication par satellite à évasion de fréquences ou EVF, lorsque celui-ci est géostationnaire. Elle peut s'étendre à d'autres liaisons que les liaisons par satellite.

L'invention trouve son application dans le domaine de la protection des télécommunications spatiales ou non, vis-à-vis des interférences.

L'application de l'invention concerne, plus généralement, les communications à évasion de fréquences en général.

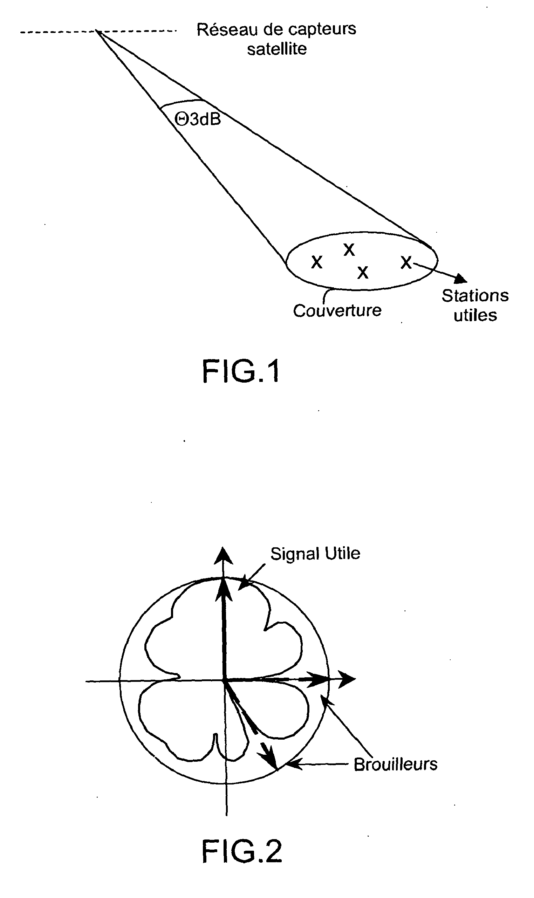

Une liaison spatiale permet à plusieurs stations terrestres de communiquer entre elles, via un satellite, dès lors que ces stations se trouvent dans la zone géographique (ou couverture) délimitée par l'un des spots du satellite, comme le montre la figure 1. La présence d'interférences au sein ou en dehors des couvertures peut empêcher toute communication entre les stations. La robustesse des liaisons à la présence d'interférences nécessite la protection des liaisons contre ces interférences.

Une première protection vis-à-vis des interférences peut être envisagée par la mise en oeuvre d'un procédé d'évasion de fréquences (EVF) qui consiste à émettre les informations sur des fréquences qui changent régulièrement toutes les T secondes où T est appelée la durée du palier. La loi de changement de fréquences, appelée loi de sauts de fréquences, est généralement périodique de période longue, ce qui la rend aléatoire sur une échelle d'observation assez courte. Elle est connue du satellite et de toutes les stations utiles. Elle permet à la liaison de ne pas rester plus que T secondes sur un canal avec interférences et de bénéficier des canaux non perturbés si ceux-ci existent.

Bien qu'elle soit efficace, cette technique, qui vise à fuir les interférences plutôt qu'à les rejeter, est limitée dans le cas d'interférences fortes étalées sur une bande très large et engendrant la pollution d'une fraction importante du nombre de paliers. Pour ces situations critiques, un système de lutte anti-interférences par traitement d'antenne est en général ajouté à l'EVF.

La lutte anti-interférences par traitement d'antenne constitue actuellement une manière efficace pour protéger une ou plusieurs communications spatiales vis-à-vis des interférences. La lutte anti-interférences par traitement d'antenne consiste à mettre en oeuvre une antenne dite adaptative à la réception, possédant la capacité d'adapter en temps réel son diagramme de rayonnement aux signaux reçus en construisant des trous de diagramme dans la direction et à la fréquence des interférences tout en préservant un gain suffisant dans la direction de ou des liaisons à protéger comme l'illustre la figure 2. Ce résultat peut être obtenu à partir d'une information minimale sur les liaisons à protéger telle que la connaissance de la position des stations utiles, de leur bande, du théâtre d'opération ou encore de séquences d'apprentissage véhiculées par les stations, sans connaissance a priori sur les interférences présentes.

Un certain nombre de systèmes de traitement d'antenne ont été développés pour protéger les liaisons à EVF des interférences [1] [2]. Toutefois, la plupart de ces systèmes mettent en oeuvre un jeu de pondérations par station [1], ce qui s'avère très coûteux ou nécessitent la duplication des chaînes de réception [2].

La demande de brevet US 2005/281242 divulgue un système antennaire et un procédé permettant de lutter contre les phénomènes d'interférences dans un système de communication où les liaisons sont à saut de fréquence, ledit système comprenant plusieurs capteurs. Le procédé utilise différents algorithmes permettant d'éliminer les interférences dans les données en réception.

L'invention concerne un procédé pour lutter contre des interférences dans un système de communication où les liaisons sont à saut de fréquences, le signal est constitué de plusieurs paliers, le système comprenant au moins un capteur principal et un ou plusieurs capteurs auxiliaires, **caractérisé en ce qu**'il comporte au moins les étapes suivantes :

  ○ insérer une ou plusieurs bande de garde entre les bandes utiles du signal à évasion de fréquence, regroupées par blocs et par sous-blocs, la surface totale des bandes de gardes insérées étant choisie afin de satisfaire une valeur de probabilité d'interception des interférences choisie (afin d'intercepter les interférences ), un palier étant alors constitué de plusieurs blocs dits étendus (avec les bandes de garde),

  ○ sélectionner les signaux des bandes de garde dont le niveau est supérieur à un seuil donné,

  ○ déterminer un vecteur de pondérations d'antibrouillage, pour chaque palier du signal, en tenant compte de la matrice de corrélation du bruit plus brouilleurs seuls sur les signaux sélectionnés à l'issue du seuillage,

  ○ filtrer par le jeu des pondérations calculées, les signaux en bande de base de l'ensemble des blocs et sous-blocs utiles du palier afin de générer des blocs et sous-blocs utiles dépourvus d'interférences.

L'invention concerne aussi un système pour lutter contre des interférences présentes dans un système de communication où les liaisons sont à saut de fréquences, le signal est constitué de plusieurs paliers, le système comprenant au moins un capteur principal Cp et un ou plusieurs capteurs auxiliaires CI, **caractérisé en ce qu**'il comporte en combinaison au moins les éléments suivants :

- un dispositif de désétalement de chaque palier du signal à une fréquence centrale donnée,

- une chaîne de transposition de paliers désétalés et une deuxième chaîne pour transposer et numériser chaque sous-bande du palier désétalé,

- un dispositif de conversion en bande de base des échantillons réels disponibles après la première transposition,

- un dispositif de calcul des coefficients de pondération,

- des moyens permettant d'appliquer ces coefficients de pondération.

La solution proposée dans la présente invention offre notamment comme avantages :

○ d'utiliser, en fonctionnement normal, un seul jeu de pondérations pour l'ensemble des stations d'une couverture,

○ de n'exploiter aucun a priori fort sur les stations et ne nécessite pas la duplication des chaînes de réception. Elle exploite une Référence Bruit plus interférences Seul (RBS) construite par discrimination spectrale entre les utiles et les interférences, c'est-à-dire par insertion de bandes de garde entre les bandes utiles. Le calcul des pondérations s'effectue alors à partir des échantillons de bruit plus interférence, seuls, dépourvus de la contribution des stations utiles, ce qui empêche la réjection des stations utiles,

○ Le système est sans mémoire et s'adapte à l'environnement d'interférences à chaque palier indépendamment d'un palier à l'autre. Il présente un temps de réaction court.

D'autres caractéristiques et avantages de la présente invention apparaîtront mieux à la lecture de la description qui suit d'un exemple donné à titre non limitatif annexé des figures qui représentent :

- La figure 1, la représentation d'une couverture d'un satellite,

- La figure 2, le diagramme de rayonnement d'une antenne après réjection des brouilleurs,

- La figure 3, un synoptique général d'un système de lutte anti-interférences selon l'invention,

- La figure 4, un exemple de calcul et application des pondérations avec un temps de réaction court,

- La figure 5, un synoptique d'un bloc étendu,

- La figure 6, une structure spectrale globale d'un palier, et

- La figure 7, une synthèse de différentes étapes du procédé selon l'invention pour lutter contre les interférences.

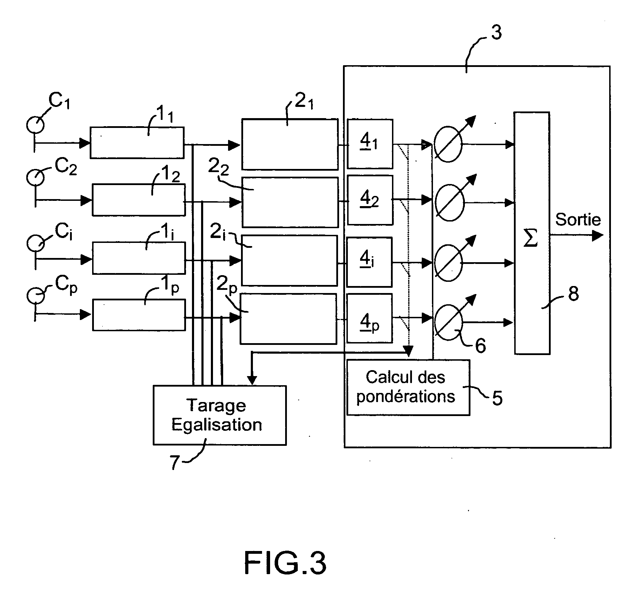

Afin de mieux faire comprendre l'objet de l'invention, la description qui suit est donnée à titre illustratif pour la lutte anti-interférences par traitement d'antenne pour une liaison montante de télécommunication par satellite à évasion de fréquences, lorsque celui-ci est géostationnaire, complétée de sa mise en oeuvre à partir du sol.
Ce procédé utilise les informations, supposées disponibles a priori, sur les couvertures à protéger, sur la loi de saut de fréquences des stations utiles ainsi que sur les bandes de celles-ci. Il met en oeuvre un filtre spatial commun à toutes les stations et exploite la présence de bandes de garde entre les bandes utiles pour discriminer les interférences des signaux utiles.
Il exploite en outre les caractéristiques de l'antenne active utilisée à bord du satellite et en particulier la connaissance des positions et des réponses des Eléments Rayonnants (ER) pour chaque direction de l'espace et chaque polarisation du champ incident ainsi que le gain et les températures de bruit équivalentes des chaînes de réception analogiques ou numériques en aval des capteurs. Ces paramètres permettent de calculer une densité spectrale de bruit en sortie de CAN (convertisseur analogique numérique intégré dans la chaîne 2i de la figure 3) et interviennent pour le réglage des seuils.

Avant d'expliciter les différentes étapes mises en oeuvre par le procédé selon l'invention, quelques rappels sur les signaux sont exposés. Signaux en sortie d'un réseau de capteurs à bord du satellite

Considérons un réseau de $N$ capteurs dont le premier, dit principal, est directif vers un ensemble de stations utiles alors que les $N-1$ suivants appelés auxiliaires sont, soit omnidirectionnels, soit pointés vers des sources interférentes après une éventuelle étape préalable de caractérisation de la situation d'interférences. Chacun de ces $N$ capteurs, situés à bord du satellite, reçoit, dans une bande de réception donnée de largeur $B$, la contribution de $U$ sources utiles, provenant du théâtre d'opération, de $P$ interférences perturbant les communications et d'un bruit de fond. Tous ces signaux sont supposés être à bande étroite pour le réseau de capteurs. Sous ces hypothèses, après désétalement des observations, numérisation des signaux en sortie des capteurs et, tarage et égalisation des voies de réception, le vecteur $x(k)$ des enveloppes complexes des signaux en sortie des chaînes de réception s'écrit, pour un palier donné :

$$x(k) = \sum_{u=1}^{U} s_u(k)\, S_u + \sum_{p=1}^{P} j_p(k)\, J_p + b(k) \tag{1}$$

où $b(k)$ est le vecteur bruit en sortie d'antenne (contributions du bruit externe et du bruit des chaînes de réception), $j_p(t)$ et $J_p$ correspondent respectivement à l'enveloppe complexe et au vecteur directeur de l'interférence $p$, $s_u(t)$ et $S_u$ correspondent respectivement à l'enveloppe complexe et au vecteur directeur de la station $u$.

Statistiques d'ordre 2 des signaux en sortie de chaînes de numérisation

En supposant les signaux décorrélés les uns des autres, les statistiques d'ordre 2 exploitées dans la suite sont définies par la matrice de corrélation moyennée des observations, donnée par :

$$R_x = < E[\, x(k)\, x(k)^\dagger\,] > = \sum_{u=1}^{U} \pi_u\, S_u\, S_u^\dagger + \sum_{p=1}^{P} \pi_p\, J_p\, J_p^\dagger + \eta_2\, I \tag{2}$$

où $<.>$ correspond à l'opération de moyennage temporel sur un horizon d'observation infini, $\pi_u = <E[|s_u(k)|^2]>$ est la puissance moyenne de la station $u$ captée par un ER omnidirectionnel, $\pi_p = <E[|j_p(k)|^2]>$ est la puissance moyenne de l'interférence $p$ captée par un ER omnidirectionnel, $\eta_2$, telle que $<E[b(k)\, b(k)^\dagger]> = \eta_2\, I$, est la puissance moyenne du bruit de fond par capteur, supposé blanc spatialement.

Formulation du problème

Le procédé selon l'invention repose notamment sur l'idée suivante : à partir des vecteurs observés x(k) sur une certaine durée, on rejette, à partir d'un seul jeu de pondérations en fonctionnement normal, les interférences présentes dans la voie principale tout en protégeant les stations utiles et ceci sans exploiter d'informations fortes sur les stations utiles en dehors de leur bande.

La figure 3 représente un synoptique général du système de lutte anti-interférences selon l'invention.

Le système comprend un certain nombre de capteurs auxiliaires Ci utilisés pour rejeter les interférences et un capteur principal Cp. Les capteurs sont reliés à un dispositif 1i ayant pour fonction de désétaler le signal à évasion de fréquence, c'est-à-dire de ramener chacun des paliers EVF à une fréquence centrale donnée. Les signaux sont ensuite transmis vers une chaîne de transposition 2i des paliers désétalés sur une première fréquence intermédiaire FI appelée FI1. La chaîne 2i effectue aussi une numérisation et une mémorisation des signaux transposés.

Les échantillons issus de l'ensemble des chaînes de numérisation sont transmis à une unité de traitement 3 comportant notamment :

○ des moyens, 4, adaptés à construire les échantillons complexes en bande de base associés aux échantillons réels disponibles en FI,

○ un moyen de tarage égalisation 7,

○ un dispositif 5 de calcul du jeu de pondérations complexes de lutte anti-interférences associé à la couverture,

○ des moyens 6 pour appliquer le jeu de pondérations ainsi calculées aux échantillons utiles issus des $N$ voies numérisées correspondantes aux voies des capteurs auxiliaires et de la voie du capteur principal,

○ les signaux pondérés sont ensuite nommés, 8.

Les filtres adaptatifs qui sont représentés à la figure 3 sont des filtres à un seul coefficient complexe par voie. Ces filtres suffisent à traiter une bande dite étroite pour le réseau.

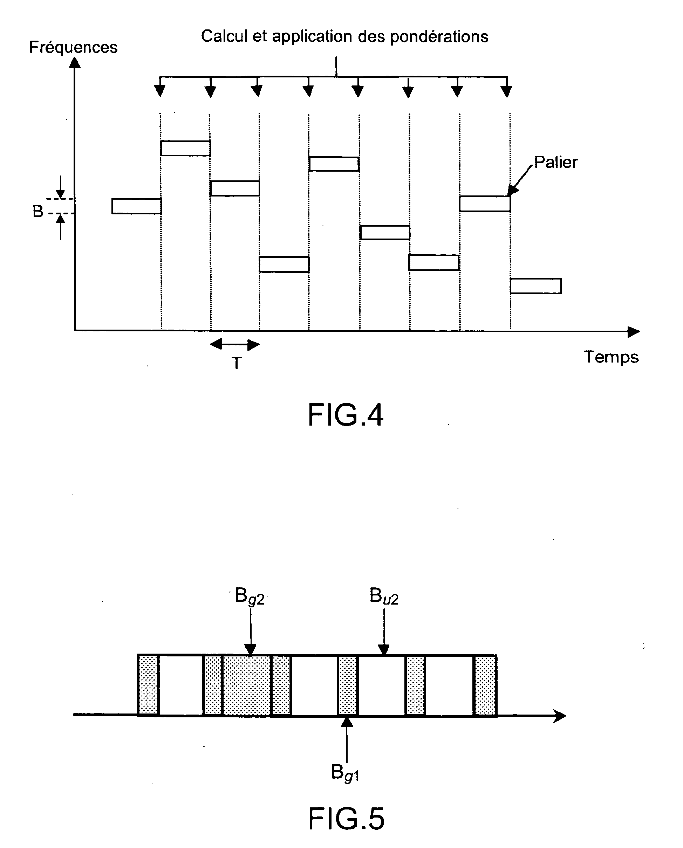

La figure 4 schématise le résultat de l'application d'un jeu de pondérations à chaque palier du signal à saut de fréquence ou évasion de fréquence à partir de la seule observation du palier courant.

Les bandes de garde ont notamment pour fonction de permettre :

- l'analyse de la situation de brouillage,

- l'interception de toutes les interférences gênantes pour la liaison,

- le calcul du jeu de pondérations à appliquer aux signaux observés.

Un éventuel système d'analyse d'interférences, oeuvrant à partir des capteurs auxiliaires, du réseau initial utilisé pour formé le faisceau du capteur principal ou d'autres capteurs (réseau dédié) a potentiellement pour rôles :

- de détecter et, le cas échéant, de localiser les interférences,

- de fournir, le cas échéant, les directions de pointage des capteurs auxiliaires,

- d'optimiser le choix des $N$-1 capteurs auxiliaires disponibles pour le traitement. A défaut du système d'analyse de la situation d'interférences, les capteurs auxiliaires sont choisis omnidirectionnels et en nombre supérieur ou égal au nombre maximal d'interférences à traiter.

Le sous-système de tarage-égalisation des voies de réception a notamment pour fonction :

- d'estimer les réponses en fréquences différentielles des chaînes de réception (tarage),

- d'en déduire les réponses impulsionnelles des filtres égaliseurs à mettre en oeuvre pour compenser ces réponses différentielles (égalisation).

Le sous-système de filtrage spatial (éléments 5 et 6 sur la figure 3) a notamment pour fonction :

- d'isoler les bandes de garde des bandes utiles,

- de calculer la pondération d'antibrouillage adaptée au palier EVF courant,

- d'appliquer la pondération sur les signaux observés.

Séquencement des opérations

La mise en oeuvre des opérations relatives au système d'antibrouillage comporte par exemple les étapes suivantes :

- le choix des bandes de garde à insérer entre les bandes utiles,

- le choix des capteurs auxiliaires,

- A partir de la caractérisation éventuelle de la situation de brouillage,

- le tarage et égalisation des voies de réception,

- Pour chaque palier du signal :

  - le désétalement du palier derrière chaque capteur,

  - la Transposition en des paliers désétalés sur une première fréquence intermédiaire FI1 après chaque capteur,

  - la Transposition sur une deuxième fréquence intermédiaire FI2 derrière chaque capteur et la numérisation pour chacune des sous-bande d'un palier désétalé,

  - le Filtrage analogique autour de la bande totale du palier étendu pour chaque capteur (un palier étendu est composé d'un palier dans lequel on a inséré des bandes de garde),

  - la Numérisation des blocs étendus du palier pour chaque capteur qui peut être effectuée, par exemple, selon les deux options suivantes :

    - Option 1 :

      - numérisation de la bande totale,

      - filtrage numérique des blocs étendus,

    - Option 2 :

      - filtrage analogique de chaque bloc étendu,

      - numérisation des blocs étendus un par un (en série ou en parallèle),

  - la Mémorisation de l'ensemble des échantillons disponibles du palier,

  - pour chaque bloc étendu du palier (bloc étendu par la bande de garde) et chaque capteur :

    - la Construction des échantillons en bande de base associés,

    - l'Isolation par Transformée de Fourier Discrète (FFT) des sous-bandes utiles et des sous-bandes de garde du bloc étendu considéré,

    - la Sélection des échantillons fréquentiels du bloc étendu considérés perturbés par les interférences,

  - la Sélection des vecteurs d'échantillons fréquentiels brouillés (associés à l'ensemble des capteurs) des bandes de garde de l'ensemble des blocs étendus du palier,

  - le calcul du jeu de pondérations à partir des vecteurs échantillons sélectionnés. Ce calcul met, par exemple, en oeuvre une solution de type OLS à RBS avec une contrainte de robustification visant à éviter la réjection des interférences faibles au sein de la couverture,

  - le Filtrage spatial, par le jeu de pondérations calculées, des échantillons vectoriels en bande de base de l'ensemble des blocs étendus du palier. On génère ainsi tous les blocs étendus dépourvus d'interférences. C'est ensuite au démultiplex fréquentiel d'isoler les contributions de chaque station au sein des blocs étendus.

Choix des bandes de garde

Comme il a été mentionné ci-dessus, l'idée de l'invention repose notamment sur l'utilisation de bandes de garde ou d'analyse insérées judicieusement entre les bandes utiles ou de stations, de manière à calculer le jeu de pondérations du filtrage spatial à partir des observations associées à ces bandes de garde.

De façon plus générale, la surface des bandes de garde insérées dans le signal est déterminée par exemple afin que l'interception des interférences gênantes (celles qui polluent les communications) se trouve garantie à un pourcentage donné.

Par exemple, la construction des bandes de garde est telle que l'interception des interférences gênantes se trouve garantie dans $PB_{max}$ % des cas si la forme d'onde tolère (100 - $PB_{max}$)% de paliers pollués.

Une des solutions pour parvenir au résultat consiste, par exemple, pour un palier donné :

- à regrouper spectralement les signaux utiles en $P_{u1}$ blocs de bande équivalente $B_{u1}$, eux-mêmes potentiellement constitués de $P_{u2}$ sous-blocs de bande $B_{u2}$ ($B_{u1} = P_{u2} \times B_{u2}$), bande associée au débit en dessous duquel la lutte anti-interférences par traitement d'antenne est considérée comme nécessaire,

- à insérer spectralement une bande de garde de bande $B_{g1}$ entre chaque sous-bloc utile $P_{u2}$ et au début et à la fin du palier,

- à insérer spectralement, en plus des bandes de garde $B_{g1}$ et pour chaque bloc utile de bande $B_{u1}$, un ou plusieurs blocs de garde de bande $B_{g2}$, ayant une largeur légèrement supérieure à $B_{u2}$, de façon judicieuse entre les sous-blocs utiles (sous-blocs de bande $B_{u2}$) avec une position différente d'un bloc utile $B_{u1}$ à un autre (bloc utile Pu1 de bande équivalente Bu1), de manière à intercepter à coups sûr les interférences gênantes à raies en particulier. Le bloc utile avec ses bandes de garde est appelé bloc étendu,

- à faire en sorte que les $P_{u1}$ blocs étendus d'un palier soient contigus, c'est-à-dire avec un espace nul entre eux. En outre les deux bandes de garde à chaque extrémité de chaque bloc étendu sont communes aux blocs étendus voisins.

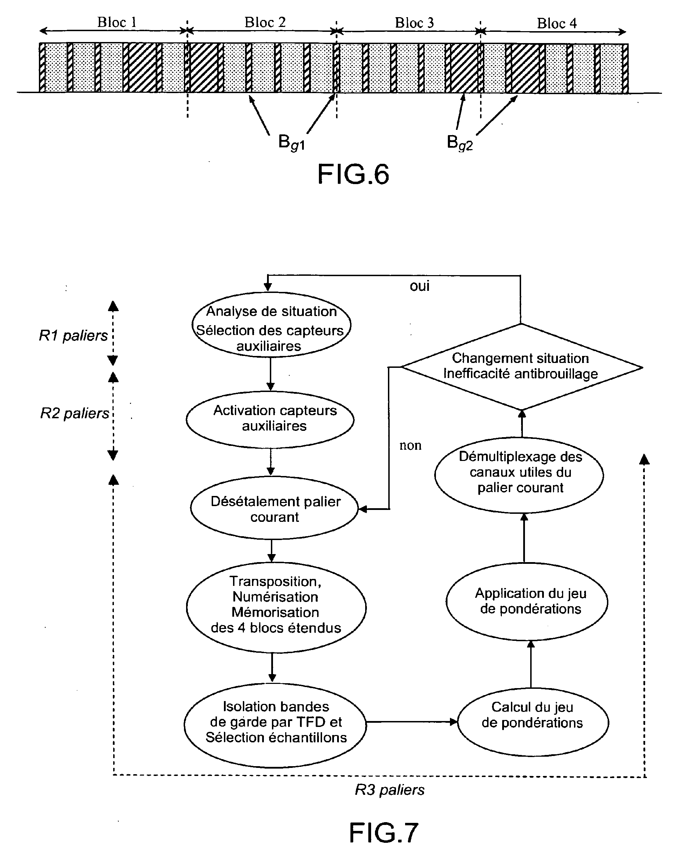

Une telle stratégie d'insertion des bandes de garde est présentée aux figures 5 et 6. La figure 5 présente le synoptique d'une solution pour le bloc étendu où $B_{g1}$ = 0.37 % B$u_2$ et $B_{g2}$ = 1.26% $B_{u2}$. La figure 6 présente les configurations relatives des blocs étendus sur $P_{u1}$ = 4 blocs consécutifs.

Cette stratégie présente toutefois la caractéristique d'augmenter la bande à numériser pour le spot, d'un facteur lié à la paramétrisation de la RBS par bandes de garde. Ces paramètres sont :

- la bande d'un bloc utile, et donc le nombre de blocs utiles dans le palier,

- la bande et le nombre de blocs de garde $B_{g1}$,

- la bande et le nombre de blocs de garde $B_{g2}$.

Ces paramètres sont à déterminer de manière à obtenir une interception des brouilleurs garantie dans $PB_{max}$ % des cas. En outre, cette structure étant constante par palier, elle permet d'envisager un multiplexeur/démultiplexeur déterministe de la forme d'onde d'un palier à l'autre.

Les capteurs auxiliaires sélectionnés sont choisis par exemple de la manière suivante :

- leur nombre doit être supérieur ou égal au nombre d'interférences à rejeter pour le palier considéré,

- pour chacune des interférences présentes, au moins un des capteurs auxiliaires possède une réponse en amplitude supérieure à celle du capteur principal dans sa direction.

Le nombre minimal d'interférences à traiter doit donc être connu ou estimé a priori, de manière à dimensionner correctement le nombre de voies auxiliaires.

D'autre part, sans analyse particulière de la situation d'interférences, des capteurs auxiliaires omnidirectionnels peuvent être envisagés. Toutefois, le choix de capteurs auxiliaires directifs vers les interférences accroît les performances du système et peut s'avérer souhaitable. Dans ces conditions, une analyse de la situation d'interférences s'impose préalablement à la configuration des voies auxiliaires.

Une analyse de la situation d'interférences dans le but de caractériser celles-ci peut-être mise en oeuvre dans une phase d'initialisation à partir de l'analyse du contenu des bandes de gardes sur R1 paliers. Il est possible d'utiliser différents types d'analyses connues de l'Homme du métier.

Tarage et égalisation des chaînes de réception

Toute technique de tarage et égalisation des chaînes de réception compatible de l'architecture matérielle utilisée peut être envisagée. L'invention peut mettre en oeuvre la technique décrite dans la référence [3].

Calcul et application des pondérations

Le calcul des pondérations et l'étape de filtrage spatial mettent en oeuvre au moins une des opérations suivantes :

- isolation des bandes utiles et des bandes de garde,

- seuillage du niveau des échantillons obtenus par l'étape d'isolation,

- calcul des pondérations,

- application des pondérations,

- réinitialisation.

Isolation des bandes utiles et des bandes de garde

Pour chaque palier et pour chaque bloc étendu du palier, l'opération d'isolation des bandes utiles et des bandes de garde d'un bloc étendu peut être obtenue par Transformée de Fourier Discrète (TFD) des échantillons en bande de base de ce bloc étendu.

On note $K$ le nombre d'échantillons vectoriels, x($k$) ($1 \leq k \leq K$), en bande de base issus de la numérisation de la bande globale $B_e$ d'un bloc étendu, avec, le cas échéant, ajout de zéros pour obtenir un nombre d'échantillons égal à une puissance de 2 et une résolution maximale correspondant à une fraction des sous-bandes d'analyse. Dès lors, si $N_p$ est le nombre de points de la TFD et $N_r$ le nombre de réalisations des TFD, le nombre d'échantillons initial est tel que $K = Np\,N_r$. Pour la réalisation $r$, la TFD des $N_p$ échantillons vectoriels x(k) (($r$-1)$N_p$+1$\leq k \leq r\,N_p$) engendre la série des $N_p$ échantillons vectoriels fréquentiels $x^r(f_i)$ ($1 \leq i \leq N_p$).

Dans ces conditions, si on note $U_b$ le nombre de (sous)-bandes utiles et G le nombre de (sous)-bandes de garde par bloc étendu, l'opération d'isolation des bandes utiles et de garde consiste, pour chacune des $N_r$ réalisations r de la TFD, à isoler :

- pour chacune des bandes utiles $u$ ($1\leq u \leq U_b$) du bloc étendu, les $N_u$ échantillons fréquentiels, $x^r(f_{ul})$ ($1 \leq l \leq N_u$), associés,

- pour chacune des bandes de garde g ($1\leq g \leq G$) du bloc étendu, les $N_g$ échantillons fréquentiels, $x^r(f_{gm})$ ($1 \leq m \leq N_g$), associés.

Seuillage du niveau des échantillons

Seuls les échantillons fréquentiels des bandes de garde d'un bloc étendu dont le niveau dépasse un certain seuil sont pris en compte pour les traitements ultérieurs, dans le but de ne pas augmenter inutilement le niveau de bruit de fond.

Plus précisément, ne sont considérés que les échantillons fréquentiels vectoriels des bandes de garde d'un bloc étendu, $x^r(f_{gm})$, tels que :

$$\mathbf{x}^r(f_{gm})^\dagger\,\mathbf{x}^r(f_{gm}) \geq \text{Seuil} \qquad (3)$$

où Seuil est un paramètre fixé a priori choisi.

On note dans la suite $M_g$ le nombre d'échantillons vectoriels fréquentiels pris en compte pour la bande de garde $g$ d'un bloc étendu. En présence de seuillage, $M_g \leq N_g$.

**Calcul des pondérations**

Le traitement relatif à la solution à RBS retenue est un traitement de type OLS-RBS avec ajout de bruit artificiel pour empêcher, le cas échéant, la réjection des interférences faibles dans la couverture que l'on ne souhaite pas rejeter.

En considérant que le capteur 1 est le capteur principal et que $N$-1 capteurs auxiliaires sont sélectionnés (au plus 3), le jeu de pondérations d'antibrouillage $w$, de dimension $N$, à calculer à chaque palier est donné par :

$$w = (c^\dagger \tilde{\hat{R}}_\delta^{-1} c)^{-1} \tilde{\hat{R}}_\delta^{-1} c \qquad (4)$$

où $c$ est le vecteur dont la première composante vaut 1 et les autres 0,

$c^\dagger = (1, 0,.., 0)$, et où $\tilde{\hat{R}}_\delta$ est la matrice ($N$, $N$) définie par :

$$\tilde{\hat{R}}_\delta = \hat{R} + \delta I \qquad (5)$$

où $\delta$ est la puissance du bruit artificiel ajouté et où $\hat{R}$ est une estimée de la matrice de corrélation du bruit plus brouilleurs seuls sur les échantillons fréquentiels sélectionnés sur l'ensemble des bandes de garde des $P_{u1}$ blocs étendus du palier, définie par :

$$\hat{R} = \frac{1}{Nr} \sum_{r=1}^{Nr} \sum_{l=1}^{Pu1} \sum_{g=1}^{G} \sum_{m=1}^{Mg} x^r(f_{lgm}) \, x^r(f_{lgm})^\dagger \qquad (6)$$

où $x^r(f_{lgm})$ correspond à l'échantillon vectoriel $m$ sélectionné sur la bande de garde $g$ du bloc étendu $l$ pour la réalisation $r$ de la FFT.
Le bruit artificiel injecté est tel que :

$$\delta = \alpha \, \delta_{ref} \qquad (7)$$

où $\alpha$ est une constante telle que $10\log_{10}(\alpha)$ est à régler à un certain niveau et où $\delta_{ref}$ correspond à la puissance du bruit artificiel de référence, fonction de la couverture et des capteurs auxiliaires, et telle que :

$$\sum_{i=1}^{N} \frac{\pi \| J(i) \|^2}{\sigma_i^2 + \delta_{ref}} = 1 \qquad (8)$$

où $\pi$ est la puissance maximale de l'interférence à protéger, $J(i)$ la composante $i$ du vecteur directeur de cette interférence et $\sigma_i^2$ la puissance de bruit de fond pour le capteur $i$.

Application des pondérations

Dès lors, à partir du jeu de pondérations $w$ et des échantillons vectoriels en bande de base $x(k)$ ($1 \leq k \leq K$), la philosophie la plus saine consiste, pour chaque bloc étendu :

- à générer, par filtrage spatial des échantillons $x(k)$, les échantillons en bande de base du bloc étendu considéré dépourvus d'interférences, $y(k)$ ($1 \leq k \leq K$), donnés par :

$$y(k) \quad = \quad w^\dagger \, x(k) \tag{9}$$

- à envoyer ces échantillons relatifs à un bloc étendu au système de démultiplexage des canaux pour filtrage et démodulation.

Réinitialisation

En cas de détection d'un changement de la situation de brouillage ou encore en cas d'inefficacité de l'antibrouillage, on préconise de relancer la phase de sélection des capteurs auxiliaires à numériser.

Références

[1] K. BAKHRU, D.J. TORRIERI, "The maximin algorithm for adaptive arrays and frequency hopping communications", IEEE Trans Ant Prop, Vol AP-32, N˚9, pp. 919-928, Sept 1984

[2] D.J. TORRIERI, K. BAKHRU, "An anticipative adaptive array for frequency-hopping communications", IEEE Trans Aerosp Elect System, Vol AES-24, N˚4, pp. 449-456, July 1988

[3] C. DONNET, P. CHEVALIER, "Procédé et dispositif de tarage-égalisation d'un système de réception", N˚ 02.12010, Sept. 2002.

**Revendications**

1. Procédé pour lutter contre des interférences dans un système de communication où les liaisons sont à saut de fréquences, le signal est constitué de plusieurs paliers de fréquence, le système comprenant au moins un capteur principal et un ou plusieurs capteurs auxiliaires, **caractérisé en ce qu'**il comporte au moins les étapes suivantes :

   ○ insérer une ou plusieurs bande de garde entre les bandes utiles du signal à saut de fréquence, la surface totale des bandes de gardes insérées étant choisie afin de satisfaire une valeur de probabilité d'interception des interférences choisie, un palier étendu étant formé de plusieurs blocs étendus constitués de blocs utiles et des bandes de garde insérées,
   ○ sélectionner les signaux des bandes de garde insérées dont le niveau est supérieur à un seuil donné,
   ○ déterminer un jeu de pondérations de filtrage spatial, pour chaque palier du signal, en tenant compte de la matrice de corrélation du bruit plus brouilleurs seuls sur les signaux sélectionnés,
   ○ filtrer par le jeu des pondérations calculées, les signaux en bande de base de l'ensemble des blocs étendus du palier afin de générer des blocs étendus dépourvus d'interférences.

2. Procédé selon la revendication 1, **caractérisé en ce que** le nombre et la position des bandes de garde insérées entre les bandes utiles est choisi afin de discriminer les émetteurs utiles des interférences et afin de garantir une probabilité d'interception des interférences gênantes dans $PB_{max}$ % des cas si la forme d'onde tolère $(100 - PB_{max})$ % de paliers brouillés.

3. Procédé selon la revendication 2, **caractérisé en ce que** l'on choisit les bandes de garde en mettant en oeuvre les étapes suivantes :

   - regrouper spectralement les signaux utiles en $P_{u1}$ blocs de bande équivalente $B_{u1}$, eux-mêmes potentiellement constitués de $P_{u2}$ sous-blocs de bande $B_{u2}$ avec $B_{u1} = P_{u2} \times B_{u2}$, bande associée au débit en dessous duquel la lutte anti-interférences par traitement d'antenne est considérée comme nécessaire,
   - insérer spectralement, une bande de garde de bande $B_{g1}$ entre chaque sous-bloc utile et au début et à la fin du palier,
   - insérer spectralement, en plus des bandes de garde $B_{g1}$ et pour chaque bloc utile de bande $B_{u1}$, un ou plusieurs blocs de garde de bande $B_{g2}$, ayant une largeur légèrement supérieure à $B_{u2}$, entre les sous-blocs utiles $B_{u2}$

avec une position différente d'un bloc utile $B_{u1}$ à un autre, de manière à intercepter à coups sûr les interférences gênantes à raies en particulier, le bloc utile avec ses bandes de garde étant appelé bloc étendu,
- à faire en sorte que les $P_{u1}$ blocs étendus d'un palier soient contigus, c'est-à-dire avec un espace nul entre eux. En outre les deux bandes de garde à chaque extrémité de chaque bloc étendu sont communes aux blocs étendus voisins.

4. Procédé selon l'une des revendications précédentes, **caractérisé en ce que** la détermination des coefficients de pondération comporte au moins les étapes suivantes :

pour chaque palier et pour chaque bloc étendu du palier, l'étape d'isolation des bandes utiles et des bandes de garde d'un bloc étendu comporte les étapes suivantes :

soit $K$ le nombre d'échantillons vectoriels, $\mathbf{x}(k)$ ($1 \leq k \leq K$), en bande de base issus de la numérisation de la bande globale $B_e$ d'un bloc étendu,
soit la série des $N_p$ échantillons vectoriels fréquentiels $\mathbf{x}^r(f_i)$ ($1 \leq i \leq N_p$) engendrés pour la réalisation r, par la Transformée de Fourier Discrète TFD des $N_p$ échantillons vectoriels $\mathbf{x}(k)$ ($(r\text{-}1) N_p + 1 \leq k \leq r N_p$),
soit $U_b$ le nombre de (sous)-bandes utiles et G le nombre de (sous)-bandes de garde par bloc étendu, l'opération d'isolation des bandes utiles et de garde consiste, pour chacune des $N_r$ réalisations rde la TFD, à isoler :

- pour chacune des bandes utiles $u$ ($1 \leq u \leq U_b$) du bloc étendu, les $N_u$ échantillons fréquentiels, $\mathbf{x}^r(f_{ul})$ ($1 \leq l \leq N_u$), associés,
- pour chacune des bandes de garde g ($1 \leq g \leq$ G) du bloc étendu, les $N_g$ échantillons fréquentiels, $\mathbf{x}^r(f_{gm})$ ($1 \leq m \leq N_g$), associés.

5. Procédé selon l'une des revendications précédentes, **caractérisé en ce que** l'on utilise un seuil déterminé à partir des échantillons fréquentiels vectoriels des bandes de garde d'un bloc étendu,

$$\mathbf{x}^r(f_{gm}), \text{ vérifiant } \mathbf{x}^r(f_{gm})^{\dagger} \, \mathbf{x}^r(f_{gm}) \geq \text{Seuil}$$

où Seuil est un paramètre fixé a priori choisi.

6. Procédé selon la revendication 3, **caractérisé en ce que** le jeu de pondérations de filtrage spatial calculés est un jeu de pondérations d'antibrouillage w, de dimension N, à calculer à chaque palier et donné par :

$$\boldsymbol{w} = (\boldsymbol{c}^{\dagger} \, \hat{\tilde{R}}_{\delta}^{-1} \, \boldsymbol{c})^{-1} \, \hat{\tilde{R}}_{\delta}^{-1} \, \boldsymbol{c}$$

où c est le vecteur dont la première composante vaut 1 et les autres 0, $\boldsymbol{c}^{\dagger} = (1, 0,.., 0)$, et où $\hat{\tilde{R}}_{\delta}$ est la matrice ($N$, $N$) définie par :

$$\hat{\tilde{R}}_{\delta} = \hat{R} + \delta \, \mathbf{I}$$

où $\delta$ est la puissance d'un bruit artificiel ajouté et où $\hat{R}$ est une estimée de la matrice de corrélation du bruit plus brouilleurs seuls sur les échantillons fréquentiels sélectionnés sur l'ensemble des bandes de garde des $P_{u1}$ blocs étendus du palier, définie par :

$$\hat{R} = \frac{1}{Nr} \sum_{r=1}^{Nr} \sum_{l=1}^{Pu1} \sum_{g=1}^{G} \sum_{m=1}^{Mg} \mathbf{x}^{r}(f_{lgm})\,\mathbf{x}^{r}(f_{lgm})^{\dagger}$$

où $\mathbf{x}^{r}(f_{lgm})$ correspond à l'échantillon vectoriel m sélectionné sur la bande de garde g du bloc étendu l pou la réalisation r de la FFT.

**7.** Procédé selon la revendication 6, **caractérisé en ce que** la puissance du bruit artificiel est de la forme :

$$\delta = \alpha\,\delta_{ref}$$

où $\alpha$ est une constante telle que $10\log_{10}(\alpha)$ est à régler à un certain niveau et où $\delta_{ref}$ correspond à la puissance du bruit artificiel de référence, fonction de la couverture et des capteurs auxiliaires, et telle que :

$$\sum_{i=1}^{N} \frac{\pi\|J(i)\|^2}{\sigma_i^2 + \delta_{ref}} = 1$$

où $\pi$ est la puissance maximale de l'interférence à protéger, $J(i)$ la composante i du vecteur directeur de cette interférence et $\sigma_i^2$ la puissance de bruit de fond pour le capteur i.

**8.** Procédé selon l'une des revendications précédentes, **caractérisé en ce que** le signal est un signal à évasion de fréquence EVF.

**9.** Procédé selon l'une des revendications 1 à 8, **caractérisé en ce que** les liaisons sont des liaisons montantes EVF dans une application satellite.

**Claims**

**1.** Method for combating interferences in a communication system in which the links are frequency hopping links, the signal consists of a plurality of frequency steps, the system comprising at least one main sensor and one or more auxiliary sensors, **characterised in that** it comprises at least the following steps:

- inserting one or more guard bands between the useful bands of the frequency hopping signal, the total surface area of the inserted guard bands being chosen so as to satisfy a chosen probability value for interception of the interferences, an extended stage being formed by a plurality of extended blocks consisting of useful blocks and inserted guard bands,
- selecting the signals of the inserted guard bands, the level of which is above a given threshold,
- determining a set of spatial filtration weightings, for each step of the signal, taking into account the correlation matrix of the noise plus scramblers alone on the selected signals,
- using the set of the calculated weightings to filter the baseband signals of all of the extended blocks of the stage in order to generate extended blocks without interferences.

**2.** Method according to claim 1, **characterised in that** the number and the position of the guard bands inserted between the useful bands is chosen in order to distinguish the useful emitters from the interferences and in order to ensure a probability for interception of the disturbing interferences in $PB_{max}$ % of cases if the waveform tolerates $(100 - Pb_{max})$ % of scrambled stages.

**3.** Method according to claim 2, **characterised in that** the guard bands are chosen by carrying out the following steps:

- spectrally grouping the useful signals into $P_{U1}$ equivalent band $B_{u1}$ blocks which themselves potentially consist of $P_{u2}$ band $B_{u2}$ sub-blocks, wherein $B_{u1} = P_{u1}$ x $B_{u2}$, band associated with the rate below which it is considered necessary to combat interferences by antenna treatment,

- spectrally inserting a band $B_{g1}$ guard band between each useful sub-block and at the start and at the end of the stage,

- spectrally inserting, in addition to the $B_{g1}$ guard bands and for each band $B_{u1}$ useful block, one or more band $B_{g2}$ guard blocks, having a width slightly greater than $B_{u2}$, between the useful sub-blocks $B_{u}2$ with a position differing from one useful block $B_{u1}$ to another, in such a way as to definitely intercept the disturbing ray interferences in particular, the useful block with its guard bands being called the extended block,

- making the $P_{u1}$ extended blocks of a stage contiguous, that is to say with a zero space between them. Furthermore, the two guard bands at each end of each extended block are common to the neighbouring extended blocks.

4. Method according to one of the preceding claims, **characterised in that** determining the weighting coefficients includes at least the following steps:

for each step and for each extended block of the step, the step of isolating the useful bands and the guard bands of an extended block includes the following steps:

if K is the number of baseband vector samples, x(k) ($1 \leq k \leq K$), obtained by the digitisation of the global band $B_e$ of an extended block,

if the series of the $N_p$ frequency vector samples is $x^r(f_i)$ ($1 \leq i \leq N_p$) generated for the implementation r, by discrete Fourier transform DFT, of the $N_p$ vector samples x(k) ($(r - 1)$ $N_p + 1 \leq k \leq r$ $N_p$),

if $U_b$ is the number of useful (sub-)bands and G is the number of guard (sub-)bands per extended block, the operation of isolating the useful and guard bands consists, for each of the $N_r$ implementations of the DFT, in isolating:

- for each of the useful bands u ($1 \leq u \leq U_b$) of the extended block, the $N_u$ associated frequency samples, $x^r(f_{ul})$ ($1 \leq 1 \leq U_u$),

- for each of the guard bands g ($1 \leq g \leq G$) of the extended block, the Ng associated frequency samples, $x^r(f_{gm})$ ($1 \leq m \leq Ng$).

5. Method according to one of the preceding claims, **characterised in that** use is made of a threshold determined from the vector frequency samples of the guard bands of an extended block,

$$x^r(f_{gm}), \text{ verifying } x^r(f_{gm})\dagger \, x^r(f_{gm}) \geq \text{Threshold}$$

where Threshold is a chosen parameter fixed in advance.

6. Method according to claim 3, **characterised in that** the set of calculated spatial filtering weightings is a set of antiscrambling weightings w, of size N, to be calculated at each stage and provided by:

$$w = (c^\dagger \, \hat{\tilde{R}}_\delta^{-1} \, c)^{-1} \, \hat{\tilde{R}}_\delta^{-1} \, c$$

where c is the vector, the first component of which has a value of 1 and the others 0, $c^\dagger = (1, 0, ..., 0)$, and where $\hat{\tilde{R}}_\delta$ is the matrix (N, N) defined by:

$$\hat{\tilde{R}}_\delta = \hat{R} + \delta I$$

where $\delta$ is the power of an added artificial noise and where $\hat{R}$ is an estimate of the matrix of correlation of the noise plus scramblers alone on the frequency samples selected on all of the guard bands of the $P_{u1}$ extended blocks of

the stage, defined by:

$$\hat{R} = \frac{1}{Nr} \sum_{r=1}^{Nr} \sum_{l=1}^{Pu1} \sum_{g=1}^{G} \sum_{m=1}^{Mg} x^r(f_{lgm}) \, x^r(f_{lgm})^{\dagger}$$

where $x_r(f_{lgm})$ corresponds to the vector sample m selected on the guard band g of the extended block l for the implementation r of the FFT.

7. Method according to claim 6, **characterised in that** the power of the artificial noise is of the form:

$$\delta = \alpha \, \delta_{ref}$$

where $\alpha$ is a constant such that $10\log_{10}(\alpha)$ is to be set to a certain level and where $\delta_{ref}$ corresponds to the power of the reference artificial noise, which is a function of the coverage and of the auxiliary sensors, and such that

$$\sum_{i=1}^{N} \frac{\pi \| J(i) \|^2}{\sigma_i^2 + \delta_{ref}} = 1$$

where $\pi$ is the maximum power of the interference to be protected, J(i) is the component i of the director vector of this interference and $\sigma_i^2$ is the background noise power for the sensor i.

8. Method according to one of the preceding claims, **characterised in that** the signal is a frequency hopping signal EVF.

9. Method according to one of claims 1 to 8, **characterised in that** the links are EVF uplinks in a satellite application.


**Patentansprüche**

1. Verfahren zum Bekämpfen von Störungen in einem Kommunikationssystem, in dem die Verbindungen Frequenzsprünge haben, wobei das Signal von mehreren Frequenzrastern gebildet wird, wobei das System wenigstens einen Hauptsensor und einen oder mehrere Nebensensoren umfasst, **dadurch gekennzeichnet, dass** es wenigstens die folgenden Schritte beinhaltet:

- Einfügen eines oder mehrerer Schutzbänder zwischen die Nutzbänder des Frequenzsprungsignals, wobei die Gesamtfläche der eingefügten Schutzbänder so gewählt wird, dass ein gewählter Wert für die Wahrscheinlichkeit des Abfangens der Störungen erzielt wird, wobei ein erweitertes Raster aus mehreren erweiterten Blöcken gebildet wird, die sich aus Nutzblöcken und den eingefügten Schutzbändern zusammensetzen,
- Auswählen der Signale der eingefügten Schutzbänder, deren Pegel höher als ein gegebener Schwellenwert ist,
- Ermitteln eines Raumfilterungsgewichtungssatzes für jedes Raster des Signals unter Berücksichtigung der Korrelationsmatrix des Geräuschs plus einzelnen Störsendern auf den gewählten Signalen,
- Filtern der Signale im Basisband der Gesamtheit der erweiterten Blöcke des Rasters durch den berechneten Gewichtungssatz, um erweiterte störungsfreie Blöcke zu erzeugen.

2. Verfahren nach Anspruch 1, **dadurch gekennzeichnet, dass** Anzahl und Position der zwischen die Nutzbänder eingefügten Schutzbänder gewählt werden, um die Nutzsender von den Störungen zu unterscheiden und um eine Wahrscheinlichkeit des Abfangens von unerwünschten Störungen in $PB_{max}$ % der Fälle zu garantieren, wenn die Wellenform (100 - $PB_{max}$)% von gestörten Rastern toleriert.

3. Verfahren nach Anspruch 2, **dadurch gekennzeichnet, dass** die Schutzbänder durch Ausführen der folgenden Schritte gewählt werden:

- spektrales Umgruppieren der Nutzsignale in $P_{u1}$ Blöcke des äquivalenten Bandes $B_{u1}$, die wiederum potenziell

von $P_{u2}$ Unterblöcken von Band $B_{u2}$ gebildet werden, wobei $B_{u1} = P_{u2} \times B_{u2}$, wobei dieses Band mit dem Ausgang assoziiert ist, unterhalb dessen eine Störungsbekämpfung durch eine Antennenbearbeitung als notwendig angesehen wird,

- spektrales Einfügen eines Schutzbandes von Band $B_{g1}$ zwischen jeden Nutzunterblock sowie am Anfang und am Ende des Rasters,

- spektrales Einfügen, zusätzlich zu den Schutzbändern $B_{g1}$ und für jeden Nutzblock von Band $B_{u1}$, eines oder mehrerer Schutzblöcke von Band $B_{g2}$, die eine Länge von etwas mehr als $B_{u2}$ haben, zwischen die Unternutzblöcke $B_{u2}$, mit einer unterschiedlichen Position von einem Nutzblock $B_{u1}$ zum anderen, um mit Sicherheit insbesondere die unerwünschten Linienstörungen abzufangen, wobei der Nutzblock mit seinen Schutzbändern erweiterter Block genannt wird,

- auf eine solche Weise, dass die erweiterten Blöcke $P_{u1}$ eines Rasters nebeneinander liegen, das heißt mit einem Abstand von null zwischen ihnen, wobei darüber hinaus die zwei Schutzbänder an jedem Ende jedes erweiterten Blocks den benachbarten erweiterten Blöcken gemeinsam sind.

4. Verfahren nach einem der vorherigen Ansprüche, **dadurch gekennzeichnet, dass** die Ermittlung der Gewichtungskoeffizienten wenigstens die folgenden Schritte beinhaltet:

   für jedes Raster und für jeden erweiterten Block des Rasters beinhaltet der Schritt des Trennens der Nutzbänder und der Schutzbänder eines erweiterten Blocks die folgenden Schritte:

   wenn K die Anzahl der Vektorabtastungen, x(k) ($1 \leq k \leq K$) im Basisband infolge der Digitalisierung des globalen Bandes $B_e$ eines erweiterten Blocks ist,
   wenn die Serie der $N_p$ Vektor-Frequenzabtastungen $x^r (f_i)$ ($1 \leq i \leq Np$) ist, erzeugt für die Realisierung r durch diskrete Fourier-Transformation DFT der Np Vektorabtastungen x(k) ($(r - 1) Np + 1 \leq k \leq r Np$),
   wenn $U_b$ die Anzahl von (Unter)-Nutzbändern und G die Anzahl von (Unter)-Schutzbändern pro erweitertem Block ist, dann besteht der Vorgang des Trennens der Nutzbänder und der Schutzbänder darin, für jede der $N_r$ Realisierungen r der DFT, Folgendes zu trennen:

   - für jedes der Nutzbänder u ($1 \leq u \leq U_b$) des erweiterten Blocks die $N_u$ assoziierten Frequenzabtastungen $x_r (f_{ul})$ ($1 \leq 1 \leq N_u$),
   - für jedes der Schutzbänder g ($1 \leq g \leq G$) des erweiterten Blocks die assoziierten Ng Frequenzabtastungen, $x^r (f_{gm})$ ($1 \leq m \leq Ng$).

5. Verfahren nach einem der vorherigen Ansprüche, **dadurch gekennzeichnet, dass** eine vorbestimmte Schwelle auf der Basis der Vektor-Frequenzabtastungen der Schutzbänder eines erweiterten Blocks $x^r (f_{gm})$, verwendet wird, wobei zu überprüfen ist, ob $\mathbf{x}^r(f_{gm})^{\dagger}\mathbf{x}^r(f_{gm}) \geq$ Schwelle ist, wobei Schwelle ein zuvor gewählter fester Parameter ist.

6. Verfahren nach Anspruch 3, **dadurch gekennzeichnet, dass** der berechnete Raumfilterungsgewichtungssatz ein Entstörungsgewichtungssatz w mit Abmessung N ist, zu berechnen auf jedem Raster und angegeben durch:

$$ w = (c^{\dagger} \, \tilde{\hat{R}}_{\delta}^{-1} \, c)^{-1} \, \tilde{\hat{R}}_{\delta}^{-1} \, c $$

wobei c der Vektor ist, dessen erste Komponente 1 ist und die anderen 0 sind, $c^{\dagger} = (1, 0, ..., 0)$, und wobei $\tilde{\hat{R}}_{\delta}$ die Matrix (N, N) ist, definiert durch:

$$ \tilde{\hat{R}}_{\delta} = \hat{R} + \delta I $$

wobei $\delta$ die Leistung eines addierten künstlichen Geräuschs und $\hat{R}$ eine Schätzung der Korrelationsmatrix des Geräuschs plus einzelne Störsender auf den gewählten Frequenzabtastungen auf der Gesamtheit der Schutzbänder der $P_{u1}$ erweiterten Blöcke des Rasters sind, definiert durch:

$$\hat{R} = \frac{1}{Nr} \sum_{r=1}^{Nr} \sum_{l=1}^{Pu1} \sum_{g=1}^{G} \sum_{m=1}^{Mg} x^r(f_{lgm}) \, x^r(f_{lgm})^{\dagger}$$

wobei $x^r(f_{lgm})$ einer gewählten Vektorabtastung m auf dem Schutzband g des erweiterten Blocks l für die Realisierung r der FFT entspricht.

7. Verfahren nach Anspruch 6, **dadurch gekennzeichnet, dass** die Leistung des künstlichen Geräuschs die folgende Form hat:

$$\delta = \alpha \, \delta_{ref}$$

wobei $\alpha$ eine Konstante ist, so dass $10_{\log 10}(\alpha)$ auf einem bestimmten Niveau zu regulieren ist, und wobei $\delta_{ref}$ der Leistung des künstlichen Referenzgeräuschs in Abhängigkeit von der Abdeckung und von den Nebensensoren entspricht, und so dass

$$\sum_{i=1}^{N} \frac{\pi \|\, J(i)\, \|^2}{\sigma_i^2 + \delta_{ref}} = 1$$

wobei $\pi$ die maximale Leistung der zu schützenden Störung ist, J(i) die Komponente i des Richtungsvektors dieser Störung ist und $\sigma_i^2$ die Leistung des Hintergrundrauschens für den Sensor i ist.

8. Verfahren nach einem der vorherigen Ansprüche, **dadurch gekennzeichnet, dass** das Signal ein EVF-(Frequenzsprung)-Signal ist.

9. Verfahren nach einem der Ansprüche 1 bis 8, **dadurch gekennzeichnet, dass** die Verbindungen EVF-Aufwärtsstrecken in einer Satellitenanwendung sind.

Réseau de capteurs
satellite

Θ3dB

Couverture

Stations
utiles

# FIG.1

Signal Utile

Brouilleurs

# FIG.2

FIG.3

Calcul et application des pondérations

Fréquences

Palier

B

T

Temps

FIG.4

$B_{g2}$

$B_{u2}$

$B_{g1}$

FIG.5

Bloc 1      Bloc 2      Bloc 3      Bloc 4

$B_{g1}$          $B_{g2}$

## FIG.6

*R1 paliers*

*R2 paliers*

oui

Analyse de situation
Sélection des capteurs
auxiliaires

Changement situation
Inefficacité antibrouillage

Activation capteurs
auxiliaires

non

Démultiplexage des
canaux utiles du
palier courant

Désétalement palier
courant

Transposition,
Numérisation
Mémorisation
des 4 blocs étendus

Application du jeu
de pondérations

Isolation bandes
de garde par TFD et
Sélection échantillons

Calcul du jeu
de pondérations

*R3 paliers*

## FIG.7

## EP 2 018 709 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005281242 A

**Littérature non-brevet citée dans la description**

- **K. BAKHRU ; D.J. TORRIERI.** The maximin algorithm for adaptive arrays and frequency hopping communications. *IEEE Trans Ant Prop,* Septembre 1984, vol. AP-32 (9), 919-928

- **D.J. TORRIERI ; K. BAKHRU.** An anticipative adaptive array for frequency-hopping communications. *IEEE Trans Aerosp Elect System,* Juillet 1988, vol. AES-24 (4), 449-456
- **C. DONNET ; P. CHEVALIER.** *Procédé et dispositif de tarage-égalisation d'un système de réception,* Septembre 2002